# FASCICULE DE BREVET EUROPEEN

(11) **EP 0 335 176 B1**
(45) Date de publication et mention de la délivrance du brevet: **04.05.1994**
(21) Numéro de dépôt: 89104608.8
(22) Date de dépôt: 15.03.1989
(51) Int. Cl.: G02B 5/28

(54) **Dispositif de filtrage électromagnétique**
Elektromagnetisches Filter
Electromagnetic filter

(30) Priorité: 22.03.1988 FR 8803700
(43) Date de publication de la demande: 04.10.1989
(73) Titulaire: ALCATEL ALSTHOM COMPAGNIE GENERALE D'ELECTRICITE, 75382 Paris Cédex 08 (FR)
(72) Inventeur: Chabassier, Geneviève, F-75014 Paris (FR); Gabriagues, Jean-Michel, F-91290 La Norville (FR); Heliodore, Frédéric, F-75014 Paris (FR); Le Mehaute, Alain, F-91190 Gif sur Yvette (FR); Mouchart, Jacques, F-94240 L'Hay les Roses (FR); Sautet, Philippe, F-78190 Trappes (FR)
(74) Mandataire: Weinmiller, Jürgen

(56) Documents cités:
- OPTICS AND SPECTROSCOPY, vol. 31, no. 1, juillet 1971, pages 71-75; F.A. KOROLEV et al.: "High-contrast light filters with multilayer dielectric coatings"
- JOURNAL OF THE OPTICAL SOCIETY OF AMERICA, vol. 72, no. 6, juin 1982, pages 683-687, Optical Society of America, New York, US; E. PELLETIER et al.: "Interference filters with multiple peaks"
- APPLIED OPTICS, vol. 26, no. 20, 15 octobre 1987, pages 4487-4490, Optical Society of America, New York, US; H.G. LOTZ: "Computer-aided multilayer design of optical filters with wide transmittance bands using SiO2 and TiO2"
- JOURNAL OF THE OPTICAL SOCIETY OF AMERICA, vol. 53, no. 11, novembre 1963, pages 1266-1270, New York, US; A. THELEN: "Multilayer filters with wide transmittance bands"

## Description

La présente invention concerne un dispositif de filtrage électromagnétique.

Dans le domaine des ondes lumineuses les dispositifs de filtrage optique connus sont des filtres interférentiels basés sur le principe de l'empilement de couches minces dont la réalisation est rendue possible notamment par les techniques modernes d'évaporation sous vide. Il peut s'agir de couches minces en matériau métallique ou diélectrique, dont l'épaisseur peut être extrêmement variable, de quelques nanomètres à plusieurs micromètres.

On sait actuellement réaliser des filtres à bande très étroite, comme par exemple les filtres Fabry-Pérot, permettant de sélectionner des raies dont la largeur peut descendre jusqu'à quelques nanomètres avec leurs harmoniques ; de tels filtres comportent au moins une vingtaine de couches (en λ/4) ainsi que des cavités Fabry-Pérot (en λ/2) en série.

On sait réaliser également des filtres pour lesquels la transmission de deux raies préalablement fixées soit identique, l'une n'étant pas l'harmonique de l'autre, mais on ne sait pas simplement aller au delà.

Par ailleurs, on sait fabriquer couramment des filtres passe-haut et des filtres passe-bas. On sait faire plus difficilement des filtres passe-bandes appelés "filtres-moins", plus complexes qui permettent d'éliminer une bande dans un domaine spectral déterminé. On ne sait pas réaliser, dans l'état de la technique, un filtre à plusieurs bandes passantes qui ne soient pas des harmoniques les unes des autres.

Pour une incidence oblique, on peut également changer l'état de vibration rectiligne, circulaire ou elliptique d'un faisceau lumineux avec l'utilisation de dépôts déphasants, ou même séparer spatialement deux directions perpendiculaires de vibration par l'utilisation de dépôts polarisants comme le font par exemple les cubes polariseurs de Mac Neille.

La présente invention a pour but de réaliser un dispositif de filtrage permettant de disposer d'une raie de transmission extrêmement étroite sans émission dans le voisinage immédiat, c'est-à-dire bien isolée dans le spectre, ou de disposer de plusieurs raies qui ne soient pas des harmoniques les unes des autres, ou de disposer de plusieurs bandes qui ne soient pas des harmoniques les unes des autres.

Ce but est atteint par le dispositif tel que défini dans la revendication 1. En ce qui concerne certaines caractéristiques d'une mise en oeuvre préférée, référence est faite aux revendications secondaires.

Les valeurs des fréquences propres ωₒ et ω₁ sont définies par l'épaisseur e_{A}, e_{B} et l'indice n_{A}, n_{B} de la cavité correspondante A,B.

Le premier empilement selon l'invention est l'empilement d'ordre 2.

Ainsi pour un dispositif à empilement d'ordre 2 on aura par exemple la succession de filtres suivants :
A₂ = A₁B₁A₁ = ABABBBABA, correspondant à sept couches superposées
B₂ = BBBBBBBBB, correspondant à une couche.

Pour un dispositif à empilement d'ordre 3, on aura la succession de filtres suivants :
A₃ = A₂ B₂ A₂ = ABABBBABABBBBBBBBBABABBBABA (avec 15 couches)
B₃ = B₂ B₂ B₂ = BBBBBBBBBBBBBBBBBBBBBBBBBBB (avec 1 couche) etc...

Les filtres A₂, A₃, Aₙ, constituent des exemples d'empilements à organisation fractale.

D'autres caractéristiques et avantages de la présence invention apparaitront au cours de la description suivante de modes de réalisation donnés à titre illustratif mais nullement limitatif.
- La figure 1 montre les variations de l'énergie T transmise par un filtre de l'art antérieur de type ABA en fonction de la fréquence f normalisée du faisceau incident.
- Les figures 2, 3, 4 sont des vues analogues à celles de la figure 1, mais respectivement pour des filtres selon l'invention, respectivement d'ordre 2, 3, 4.
- La figure 5 est une vue analogue à celle de la figure 1, pour un filtre de l'art antérieur de type ABABA.
- La figure 6 est analogue à la figure 2 pour un filtre selon l'invention d'ordre 2, mais présentant l'empilement
   ABABABBBBBABABABBBBBABABA.
- La figure 7 est analogue à la figure 6 pour un filtre selon l'invention d'ordre 3.
- Les figures 8A et 8B sont analogues à la figure 7 pour un filtre selon l'invention d'ordre 4.
- La figure 9 est un diagramme appelé "attracteur étrange" et visualisant pour un filtre ABABBBABA d'ordre 2 les variations des transmissions des fréquences en fonction des variations de l'indice optique de B par rapport à l'indice optique de A.

On part d'un filtre A d'indice n_{A} = 2,4, d'un filtre B d'indice n_{B} = 1,35.

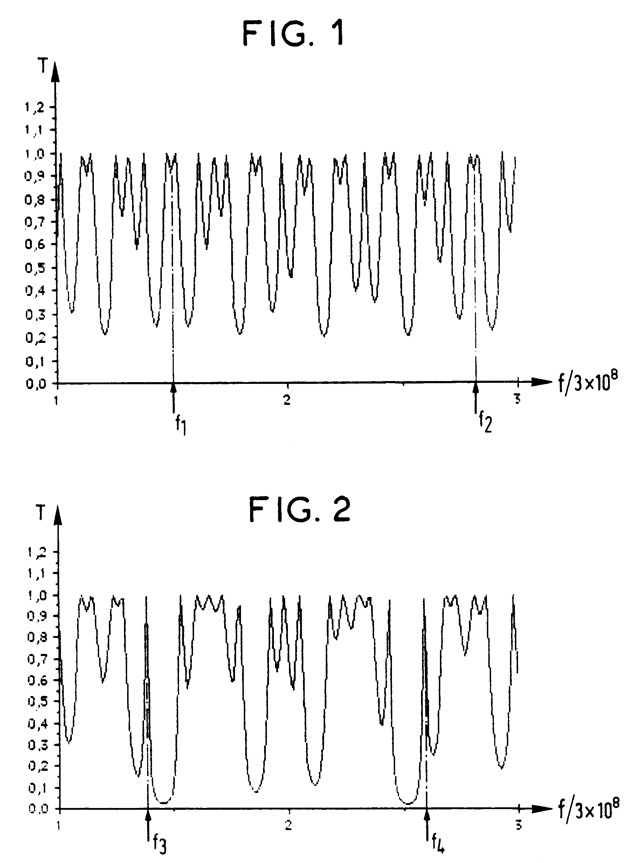

Les épaisseurs de A et B sont choisies de manière que ωₒ = ω₁. On réalise un filtre selon l'art antérieur A₁ = ABA, dont l'épaisseur optique totale est égale à 10 micromètres.
Les fréquences f sont normalisées par le facteur 3 x 10⁸. On observe dans la figure 1 que la bande passante sur l'énergie fondamentale, c'est-à-dire harmoniques exclus, est comprise entre f₁ et f₂ et qu'il apparaît dans le spectre une périodicité que l'on ne veut pas.
La résolution est très moyenne et on ne voit pas de bandes isolées.

La figure 2 correspond à la transmission d'un filtre d'ordre 2, c'est-à-dire correspondant à un empilement selon l'invention ABABBBABA d'épaisseur optique totale égale à 10 micromètres. L'épaisseur du filtre A est alors e_{A} = 0,469 µm et l'épaisseur du filtre B est e_{B} = 0,823 µm.
Il apparaît sur les bords des raies fines f₃, f₄ dont la largeur est de 160 nm (1600Å), et qui sont très bien résolues.

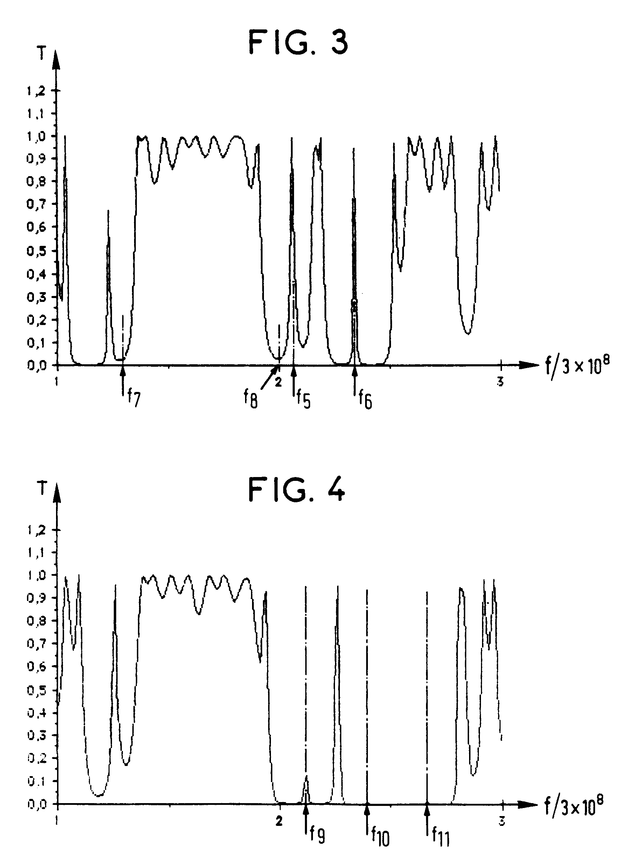

La figure 3 correspond à la transmission d'un filtre d'ordre 3, c'est-à-dire correspondant à l'empilement ABABBBABABBBBBBBBBABABBBABA d'épaisseur optique totale égale à 10 micromètres. L'épaisseur du filtre A est alors e_{A} = 0,154 µm et l'épaisseur du filtre B est e_{B} = 0,274 µm. La finesse des raies s'accroît et l'on observe en particulier deux raies bien indépendantes l'une de l'autre f₅ et f₆, cette dernière étant particulièrement bien résolue. La largeur de raie est de 5,3 nm (53 Å).
En outre on voit apparaître une bande passante très bien résolue entre f₇ et f₈.

Le résultat est encore plus significatif à la figure 4 où l'on voit la transmission d'un filtre d'ordre 4 pour lequel e_{A} = 51,4 nm (514 Å) et e_{B} = 91,4 nm (914 Å). Des raies sont très bien isolées aux fréquences f₉, f₁₀, f₁₁, présentant des largeurs très inférieures à 1 nm (10 Å).

On réalise ensuite un dispositif de filtrage comportant un autre type d'empilement de l'art antérieur ABABA. On part toujours d'un filtre A d'indice optique 2,4 et d'un filtre B d'indice optique 1,35. On réalise un filtre d'épaisseur optique globale égale à 10 micromètres, l'épaisseur du filtre A étant de 1,64 µm et celle du filtre B étant de 2,537 µm.

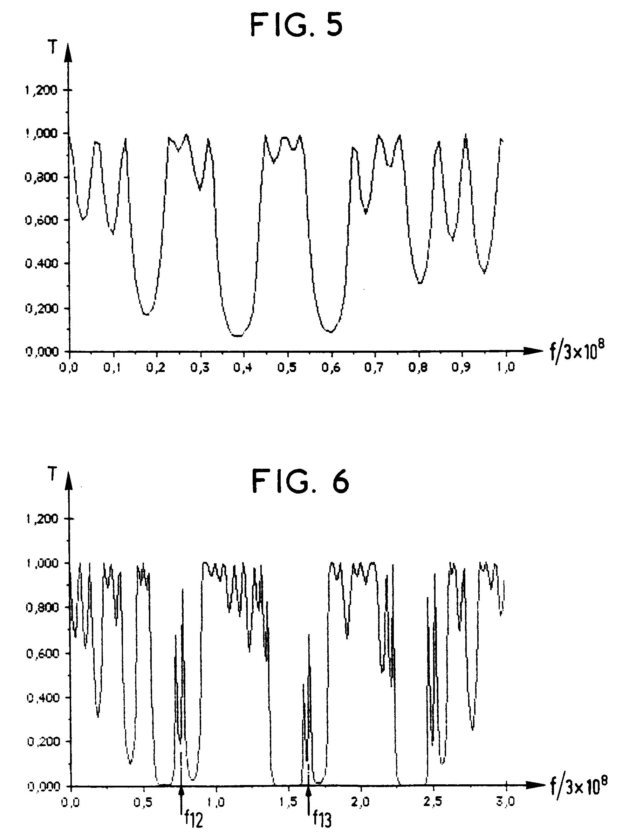

La figure 5 montre la transmission de ce filtre qui présente une mauvaise résolution.
La figure 6 correspond à un filtre selon l'invention d'ordre 2, c'est-à-dire comportant l'empilement :
ABABABBBBBABABABBBBBABABA sur une épaisseur optique de 10 micromètres. L'épaisseur de la couche A est de 0,269 µm et celle de la couche B de 0,416 µm. On voit apparaître des raies isolées aux fréquences f₁₂ et f₁₃ qui ne sont pas des harmoniques l'une de l'autre, et de belles bandes passantes.

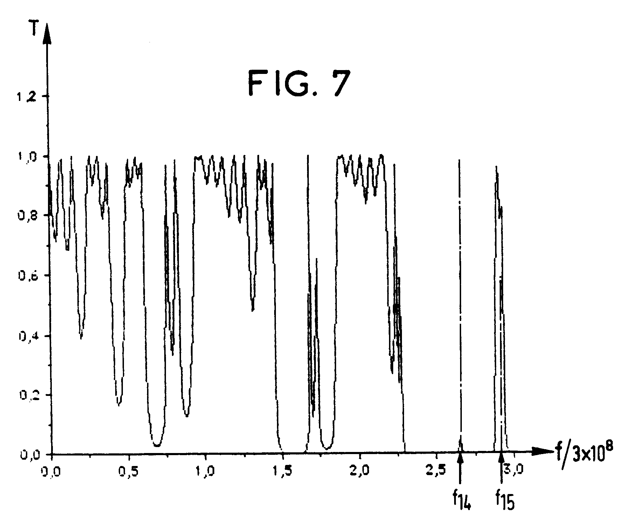

La figure 7 correspond à un filtre présentant la même séquence que la figure 6 mais d'ordre 3. L'épaisseur de la couche A est alors de 44 nm (440 Å) et celle de la couche B de 106 nm (1060 Å). On voit apparaître des raies très fines au bord du spectre aux fréquences f₁₄ et f₁₅ ; ces raies sont très bien résolues. Des bandes bien séparées apparaissent également.

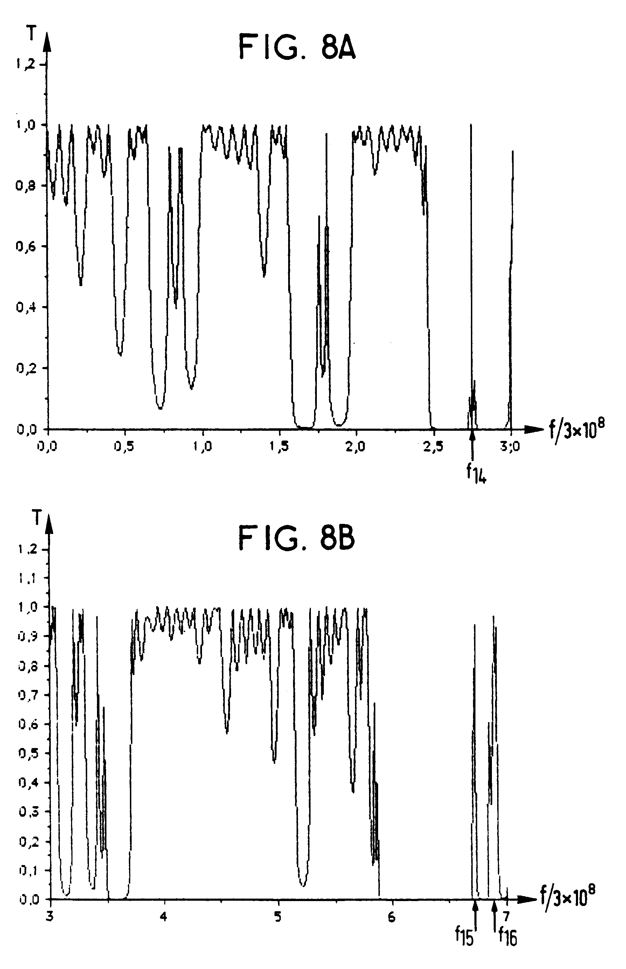

Ce phénomène est également visible dans les figures 8A et 8B où l'on a un filtre de même séquence, mais d'ordre 4. Dans ce cas l'épaisseur de A est de 10 nm (100 Å) et l'épaisseur de B de 11 nm (110 Å). On remarque les raies f₁₄, f₁₅, f₁₆.

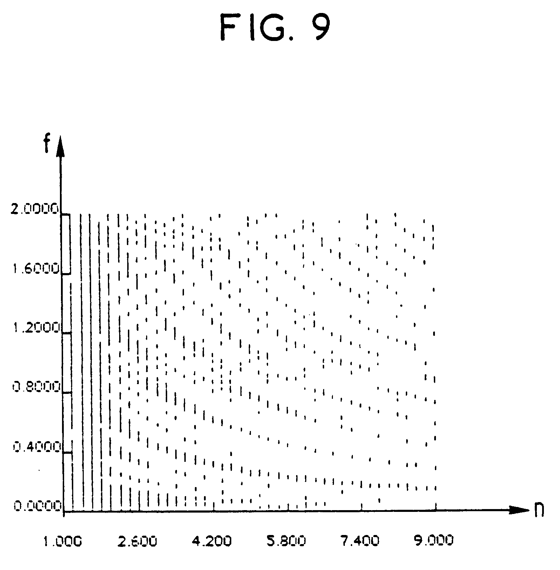

On peut voir dans la figure 9 comment varient les fréquences transmises en fonction de la variation du rapport des indices de A et de B. Le diagramme obtenu est un attracteur étrange. Cette variante correspond à un filtre d'ordre 2, comme celui de la figure 2, avec une couche A d'indice égal à 2,4 et une couche B avec un indice variant (en abscisse) de 1,2 à 9.

Quand la transmittance est supérieure à 0,7, on a un point noir; si elle est inférieure on a du blanc.
On voit que dans certaines zones d'indices, il est plus aisé de sélectionner les fréquences. La connaissance de l'attracteur étrange permet d'établir la valeur relative des indices permettant de localiser une bande choisie.

Bien entendu l'invention n'est pas limitée aux modes de réalisation qui ont été décrits ci-dessus, en particulier l'invention n'est pas limitée au filtrage des longueurs d'ondes optiques. Par ailleurs l'application de la séquence porte soit sur les épaisseurs géométriques des couches, soit sur les épaisseurs optiques de ces couches.

Enfin il est possible de changer les épaisseurs des couches par compression ou laminage, ou autre, de l'ensemble formé à l'ordre n.

## Revendications

1. Dispositif de filtrage électromagnétique comportant un empilement Aₙ de cavités électromagnétiques sous forme de couches minces, caractérisé par le fait que l'on part d'une première cavité A dont l'épaisseur géométrique ou optique et l'indice optique lui confèrent une fréquence propre ωₒ, et d'une seconde cavité B, dont l'épaisseur géométrique ou optique et l'indice optique lui confèrent une fréquence propre ω₁ et que ledit empilement Aₙ, avec n supérieur ou égale à 2, présente une séquence f du type fractal non périodique telle que
Aₙ = f(Aₙ₋₁, Bₙ₋₁) avec Bₙ₋₁ = g (Aₙ₋₂, Bₙ₋₂),
f et g étant des fonctions définissant deux séquences élémentaires choisies parmi :
. Aₙ = Aₙ₋₁ Bₙ₋₁ Aₙ₋₁
avec Bₙ = Bₙ₋₁ Bₙ₋₁ Bₙ₋₁, A₁ = ABA et B₁ = BBB,
. Aₙ = Aₙ₋₁ Bₙ₋₁ Aₙ₋₁
avec Bₙ = Aₙ₋₁ Aₙ₋₁ Aₙ₋₁, A₁ = ABA et B₁ = AAA,
. Aₙ = Aₙ₋₁ Bₙ₋₁ Aₙ₋₁ Bₙ₋₁ Aₙ₋₁
avec Bₙ = Bₙ₋₁ Bₙ₋₁ Bₙ₋₁ Bₙ₋₁ Bₙ₋₁, A₁ = ABABA et B₁ = BBBBB
. Aₙ = Aₙ₋₁ Bₙ₋₁ Aₙ₋₁ Bₙ₋₁ Aₙ₋₁
avec Bₙ = Aₙ₋₁ Aₙ₋₁ Aₙ₋₁ Aₙ₋₁ Aₙ₋₁, A₁ = ABABA et B₁ = AAAAA
. Aₙ = Aₙ₋₁ Bₙ₋₁ Aₙ₋₁ Bₙ₋₁
avec Bₙ = Bₙ₋₁ Bₙ₋₁ Bₙ₋₁ Bₙ₋₁, A₁ = ABAB et B₁ = BBBB,
. Aₙ = Aₙ₋₁ Bₙ₋₁ Aₙ₋₁ Bₙ₋₁
avec Bₙ = Aₙ₋₁ Aₙ₋₁ Aₙ₋₁ Aₙ₋₁, A₁ = ABAB et B₁ = AAAA,
. Aₙ = Aₙ₋₁ Aₙ₋₁ Bₙ₋₁ Bₙ₋₁
avec Bₙ = Bₙ₋₁ Bₙ₋₁ Bₙ₋₁ Bₙ₋₁, A₁ = AABB et B₁ = BBBB,
. Aₙ = Aₙ₋₁ Aₙ₋₁ Bₙ₋₁ Bₙ₋₁
avec Bₙ = Aₙ₋₁ Aₙ₋₁ Aₙ₋₁ Aₙ₋₁, A₁ = AABB et B₁ = AAAA,

2. Dispositif de filtrage selon la revendication 1, caractérisé par le fait que ladite séquence f s'applique sur les épaisseurs géométriques desdites couches.

3. Dispositif de filtrage selon la revendication 1, caractérisé par le fait que ladite séquence f s'applique sur les épaisseurs optiques desdites couches.

## Claims

1. An electromagnetic filter device comprising a stack Aₙ of electromagnetic cavities in the form of thin layers, the device being characterized by the fact that a first cavity A whose geometrical or optical thickness and refractive index give it a natural frequency ω₀ and a second cavity B, whose geometrical or optical thickness and refractive index give it a natural frequency ω₁ and that said stack Aₙ, where n is greater or equal to 2, has a sequence f of the non-periodic fractal type such that:
An = f(Aₙ₋₁, Bₙ₋₁) with Bₙ₋₁ = g(Aₙ₋₂, Bₙ₋₂),
f and g being two elementary sequence-defining functions selected from:
Aₙ = Aₙ₋₁ Bₙ₋₁ Aₙ₋₁
with Bₙ = Bₙ₋₁ Bₙ₋₁ Bₙ₋₁, A₁ = ABA and B₁ = BBB
Aₙ = Aₙ₋₁ Bₙ₋₁ Aₙ₋₁
with Bₙ = Aₙ₋₁ Aₙ₋₁ Aₙ₋₁, A₁ = ABA and B₁ = AAA
Aₙ = Aₙ₋₁ Bₙ₋₁ Aₙ₋₁ Bₙ₋₁ Aₙ₋₁
with Bₙ = Bₙ₋₁ Bₙ₋₁ Bₙ₋₁ Bₙ₋₁ Bₙ₋₁, A₁ = ABABA and B₁ = BBBBB
Aₙ = Aₙ₋₁ Bₙ₋₁ Aₙ₋₁ Bₙ₋₁ Aₙ₋₁
with Bₙ = Aₙ₋₁ Aₙ₋₁ Aₙ₋₁ Aₙ₋₁ Aₙ₋₁, A₁ = ABABA and B₁ = AAAAA
Aₙ = Aₙ₋₁ Bₙ₋₁ Aₙ₋₁ Bₙ₋₁
with Bₙ = Bₙ₋₁ Bₙ₋₁ Bₙ₋₁ Bₙ₋₁, A₁ = ABAB and B₁ = BBBB
Aₙ = Aₙ₋₁ Bₙ₋₁ Aₙ₋₁ Bₙ₋₁
with Bₙ = Aₙ₋₁ Aₙ₋₁ Aₙ₋₁ Aₙ₋₁, A₁ = ABAB and B₁ = AAAA.
Aₙ = Aₙ₋₁ Aₙ₋₁ Bₙ₋₁ Bₙ₋₁
with Bₙ = Bₙ₋₁ Bₙ₋₁ Bₙ₋₁ Bₙ₋₁, A₁ = AABB and B₁ = BBBB
Aₙ = Aₙ₋₁ Aₙ₋₁ Bₙ₋₁ Bₙ₋₁
with Bₙ = Aₙ₋₁ Aₙ₋₁ Aₙ₋₁ Aₙ₋₁, A₁ = AABB and B₁ = AAAA.

2. A filter device according to claim 1, characterized by the said fact that said sequence f is applied to the geometrical thicknesses of said layers.

3. A filter device according to claim 1, characterized by the fact that said sequence f is applied to the optical thicknesses of said layers.

## Patentansprüche

1. Elektromagnetische Filtervorrichtung mit einem Stapel Aₙ von elektromagnetischen Räumen in Form von dünnen Schichten, dadurch gekennzeichnet, daß man von einem ersten Raum A ausgeht, dessen geometrische oder optische Dicke und optischer Brechungsindex ihm eine Eigenfrequenz ω₀ verleihen, und von einem zweiten Raum B, dessen geometrische oder optische Dicke und dessen Brechungsindex ihm eine Eigenfrequenz ω₁ verleihen, und daß der Stapel Aₙ, wobei n größer oder gleich 2 ist, eine Folge f vom unperiodischen Fraktaltyp aufweist, derart, daß gilt:
Aₙ = f(Aₙ₋₁), Bₙ₋₁) mit Bₙ₋₁ = g(Aₙ₋₂, Bₙ₋₂),
wobei f und g Funktionen sind, die zwei der nachfolgenden Elementarfolgen definieren:
. Aₙ = Aₙ₋₁Bₙ₋₁Aₙ₋₁
mit Bₙ = Bₙ₋₁Bₙ₋₁Bₙ₋₁, A₁ = ABA und B₁ = BBB
. Aₙ = Aₙ₋₁Bₙ₋₁Aₙ₋₁
mit Bₙ = Aₙ₋₁Aₙ₋₁Aₙ₋₁, A₁ = ABA und B₁ = AAA
. Aₙ = Aₙ₋₁Bₙ₋₁Aₙ₋₁Bₙ₋₁Aₙ₋₁
mit Bₙ = Bₙ₋₁Bₙ₋₁Bₙ₋₁Bₙ₋₁Bₙ₋₁, A₁ = ABABA und B₁ = BBBBB
. Aₙ = Aₙ₋₁Bₙ₋₁Aₙ₋₁Bₙ₋₁Aₙ₋₁
mit Bₙ = Aₙ₋₁Aₙ₋₁Aₙ₋₁Aₙ₋₁Aₙ₋₁, A₁ = ABABA und B₁ = AAAAA
. Aₙ = Aₙ₋₁Bₙ₋₁Aₙ₋₁Bₙ₋₁
mit Bₙ = Bₙ₋₁Bₙ₋₁Bₙ₋₁Bₙ₋₁, A₁ = ABAB und B₁ = BBBB
. Aₙ = Aₙ₋₁Bₙ₋₁Aₙ₋₁Bₙ₋₁
mit Bₙ = Aₙ₋₁Aₙ₋₁Aₙ₋₁Aₙ₋₁, A₁ = ABAB und B₁ = AAAA
. Aₙ = Aₙ₋₁Aₙ₋₁Bₙ₋₁Bₙ₋₁
mit Bₙ = Bₙ₋₁Bₙ₋₁Bₙ₋₁Bₙ₋₁, A₁ = AABB und B₁ = BBBB
. Aₙ = Aₙ₋₁Aₙ₋₁Bₙ₋₁Bₙ₋₁
mit Bₙ = Aₙ₋₁Aₙ₋₁Aₙ₋₁Aₙ₋₁, A₁ = AABB und B₁ = AAAA.

2. Filtervorrichtung nach Anspruch 1, dadurch gekennzeichnet, daß die Folge f sich auf die geometrischen Dicken der Schichten bezieht.

3. Filtervorrichtung nach Anspruch 1, dadurch gekennzeichnet, daß die Folge f sich auf die optischen Dicken der Schichten bezieht.
